# EUROPÄISCHE PATENTANMELDUNG

(11) **EP 4 029 836 A1**
(43) Veröffentlichungstag der Anmeldung: **20.07.2022**
(21) Anmeldenummer: 21151358.5
(22) Anmeldetag: 13.01.2021
(51) Int. Cl.: C02F 5/02, C02F 1/52

(54) **VORRICHTUNG ZUM ENTHÄRTEN VON WASSER**

(71) Anmelder: Robert Bosch GmbH, 70442 Stuttgart (DE)
(72) Erfinder: Haresh Anant, Vaidya, 71120 Grafenau (DE)

(57) **Zusammenfassung**

Die Erfindung betrifft eine Vorrichtung zum Enthärten von Wasser, aufweisend einen Behälter mit einer Eingangsöffnung und einer Ausgangsöffnung und einem Generator für Nanoblasen, wobei der Generator für Nanoblasen eingerichtet ist, Gasblasen mit einem Durchmesser von bis zu zehn Mikrometern zu erzeugen. Die Erfindung betrifft außerdem ein Verfahren, bei welchem mittels eines Generators Nanoblasen mit einem Durchmesser von bis zu zehn Mikrometern im Wasser erzeugt werden und ein Verfahren, bei welchem die Nanoblasen als Kristallisationskeime zur Bildung von Kristallstrukturen für im Wasser gelöste Ionen dienen.

## Beschreibung

Die Erfindung betrifft eine Vorrichtung und ein Verfahren zum Enthärten Wasser.

### Stand der Technik

Aus dem Stand der Technik sind Vorrichtungen und Methoden zum Enthärten von Wasser bekannt, bei denen mittels lonenaustauschtechnik kalkbildende lonen aus dem Wasser entfernt und dafür andere Salze in das Wasser eingebracht werden. Ferner sind auch Chemikalien- und Salzfreie Verfahren bekannt, bei denen Polymerperlen als Kristallisationskeime genutzt werden, wobei Nanokristalle aus Calciumcarbonat und Magnesiumcarbonat an den Oberflächen der Polymerperlen gebildet werden und diese eine Größe erreichen, die eine Ablagerung des Calciumcarbonats oder Magnesiumcarbonats an Oberflächen verhindert beziehungsweise wobei die Kristalle nicht mehr auf der Oberfläche haften. Diese Technologie ist in den US-Patentanmeldungen US 2014/0318777 A1 und US 2014/0318762 A1 beschrieben. Nachteilig an diesem Vorgehen ist jedoch, dass die Polymerperlen sehr teuer sind und nach einer gewissen Zeit ersetzt werden müssen.

### Offenbarung der Erfindung

Eine Aufgabe der Erfindung ist es, eine Vorrichtung beziehungsweise ein Verfahren zum Enthärten von Wasser bereitzustellen, bei dem analog zum bekannten Verfahren mit Polymerperlen Kristallisationskeime für Calciumcarbonat und Magnesiumcarbonat in das Wasser eingebracht werden, wobei die Kristallisationskeime einfacher und kostengünstiger bereitgestellt werden können.

Diese Aufgabe wird mit den Gegenständen der unabhängigen Patentansprüche gelöst. Vorteilhafte Ausgestaltungen sind in den abhängigen Patentansprüchen angegeben.

Eine Vorrichtung zum Enthärten von Wasser weist einen Behälter mit einer Eingangsöffnung und einer Ausgangsöffnung sowie einen Generator für Nanoblasen auf. Der Generator für Nanoblasen ist eingerichtet, Gasblasen mit einem Durchmesser von bis zu zehn Mikrometern zu erzeugen. Die Gasblasen mit einem Durchmesser von bis zu zehn Mikrometern, die auch als Nanoblasen bezeichnet werden, können dabei als Kristallisationskeime zur Bildung von Kristallstrukturen dienen. Insbesondere Calciumcarbonat und Magnesiumcarbonat sowie Calciumhydrogencarbonat und Magnesiumhydrogencarbonat können sich an die Nanoblasen anlagern und dort Kristalle bilden, die sich anschließend nicht mehr innerhalb von Rohrleitungen oder auf Oberflächen ablagern und somit weder Rohre zusetzen noch zu unschönen Kalkablagerungen auf Oberflächen wie beispielsweise Fliesen oder Duschtüren führen.

Die Erzeugung solcher Nanoblasen ist aus dem Stand der Technik bekannt und beispielsweise in den Druckschriften US 2016/0339399 A1, US 2016/0319209 A1 sowie US 2016/0236158 A1 bekannt. Bezüglich des Erzeugens der Nanoblasen wird der Inhalt der genannten US-Druckschriften durch Rückbezug in diese Patentanmeldung aufgenommen. Kerngedanke der Erfindung ist es also, die an sich bekannten Nanoblasen in einer Vorrichtung zum Enthärten von Wasser beziehungsweise einem Verfahren zum Enthärten von Wasser einzusetzen.

In einer Ausführungsform des Verfahrens dienen die Gasblasen als Kristallisationskeime zur Bildung von Kristallstrukturen für im Wasser gelöste Ionen. In einer Ausführungsform umfassen diese Ionen Magnesium (II)-, Calcium (II), Hydrogencarbonat und/oder Carbonat-Ionen. Diese können auch als Mg²⁺-, Ca²⁺-, HCO₃⁻- oder CO₃²-Ionen bezeichnet werden. Gerade diese genannten Ionen bilden Kalkablagerungen in Rohrleitungen beziehungsweise auf Oberflächen in Privathaushalten und sind aus diesem Grund besonders unerwünscht.

In einer Ausführungsform des Verfahrens weist die Eingangsöffnung und/oder die Ausgangsöffnung einen Rohranschluss auf. Mittels des Rohranschlusses kann die Vorrichtung innerhalb eines Hausnetzes für Wasser eingesetzt werden und eine entsprechende Enthärtung des Wassers vornehmen. Die Eingangsöffnung kann dabei dem Wasseranschluss des Hauses zugewandt sein, während die Ausgangsöffnung den Hausleitungen zugewandt sein kann.

In einer Ausführungsform weist der Generator eine Ausgangsdüse auf, wobei die Ausgangsdüse im Behälter angeordnet ist. Die Ausgangsdüse kann eingerichtet sein, die Nanoblasen in das Wasser einzubringen. Ist die Ausgangsdüse innerhalb des Behälters angeordnet, kann es vorgesehen sein, dass ein Großteil der durch die Nanoblasen ausgelösten Kristallisationen innerhalb des Behälters stattfindet. Hierzu kann der Behälter beispielsweise ein Stück Rohrleitung aufweisen, welches einen größeren Durchmesser aufweist als die sonst verbauten Rohrleitungen, wodurch eine Fließgeschwindigkeit des Wassers innerhalb der Vorrichtung im Vergleich zu den Rohrleitungen reduziert ist.

In einer alternativen Ausführungsform kann es jedoch auch vorgesehen sein, die Ausgangsdüse zur Erzeugung der Nanoblasen außerhalb des Behälters anzuordnen. Insbesondere kann es auch vorgesehen sein, dass die Vorrichtung ein Stück Rohrleitung mit einer integrierten Ausgangsdüse umfasst und in ein Rohrleitungssystem eines Hauses eingesetzt wird.

In einer Ausführungsform weist der Generator eine Ansaugöffnung für Luft auf. Die Gasblasen sind Luftblasen. Dies ermöglicht die besonders kostengünstige Herstellung beziehungsweise Bereitstellung der Nanoblasen, da einfache Umgebungsluft verwendet werden kann. In alternativen Ausführungsformen kann es jedoch auch vorgesehen sein, dass der Generator einen Gasanschluss für einen Gasbehälter aufweist, beispielsweise eine Gasflasche, womit die Gasblasen eventuell mittels eines Gases erzeugt werden können, welches besser geeignet zur Kristallisation der genannten Ionen ist als Luft.

In einer Ausführungsform weist der Behälter in einer ersten Raumrichtung eine deutlich größere Ausdehnung auf als in einer zweiten und in einer dritten Raumrichtung. Es ist vorgesehen, den Behälter derart zu verwenden, dass im Betrieb die erste Raumrichtung im Wesentlichen senkrecht zur Erdoberfläche ist und die Gasblasen an dem der Erdoberfläche zugewandten Ende des Behälters erzeugt werden können. In diesem Fall steigen die Gasblasen innerhalb des Behälters entlang der ersten Raumrichtung weg von der Erdoberfläche auf, wodurch eine große Verweildauer innerhalb des Behälters erreicht wird. Dies ermöglicht einen effizienten Einsatz der beschriebenen Technologie.

In einer Ausführungsform sind die Eingangsöffnung und die Ausgangsöffnung an dem der Erdoberfläche abgewandten Ende des Behälters angeordnet. Ein Rohr innerhalb des Behälters ist von der Eingangsöffnung bis in die Nähe des der Erdoberfläche zugewandten Endes des Behälters geführt. In dieser Ausführungsform fließt Wasser, welches in den Behälter eintritt, zunächst durch das Rohr bis zu dem der Erdoberfläche zugewandten Ende des Behälters, an dem auch die Gasblasen erzeugt werden. Die Gasblasen steigen innerhalb des Behälters auf, während das Wasser in die gleiche Richtung im Behälter nach oben fließt, hin zur Ausgangsöffnung. Somit kann ein Großteil der Kristallisationsvorgänge bereits innerhalb des Behälters erfolgen.

In einer alternativen Ausführungsform kann auch die Ausgangsöffnung mit dem Rohr verbunden sein und das Wasser zunächst im Behälter entgegen der Aufsteigerichtung der Gasblasen nach unten geführt werden und anschließend durch das Rohr zur Ausgangsöffnung gelangen.

In einem Verfahren zum Enthärten von Wasser werden mittels eines Generators Nanoblasen mit einem Durchmesser von bis zu zehn Mikrometern im Wasser erzeugt. Dies dient dazu, Kristallisationskeime für gewisse Ionen bereitzustellen.

In einer Ausführungsform dienen die Nanoblasen als Kristallisationskeime zur Bildung von Kristallstrukturen für im Wasser gelöste Ionen. Dies ermöglicht ein effizientes Enthärtungsverfahren für Wasser.

Ausführungsbeispiele der Erfindung werden anhand der folgenden Zeichnungen erläutert. In der schematischen Zeichnung zeigen:
- Fig. 1: einen Querschnitt eines ersten Ausführungsbeispiels einer Vorrichtung zum Enthärten von Wasser;
- Fig. 2: einen Querschnitt eines zweiten Ausführungsbeispiels einer Vorrichtung zum Enthärten von Wasser;
- Fig. 3: einen Querschnitt eines dritten Ausführungsbeispiels/durch ein drittes Ausführungsbeispiel einer Vorrichtung zum Enthärten von Wasser;
- Fig. 4: einen Querschnitt eines vierten Ausführungsbeispiels/durch ein viertes Ausführungsbeispiel einer Vorrichtung zum Enthärten von Wasser; und
- Fig. 5: eine Anlagerung von Ionen an eine Gasblase.

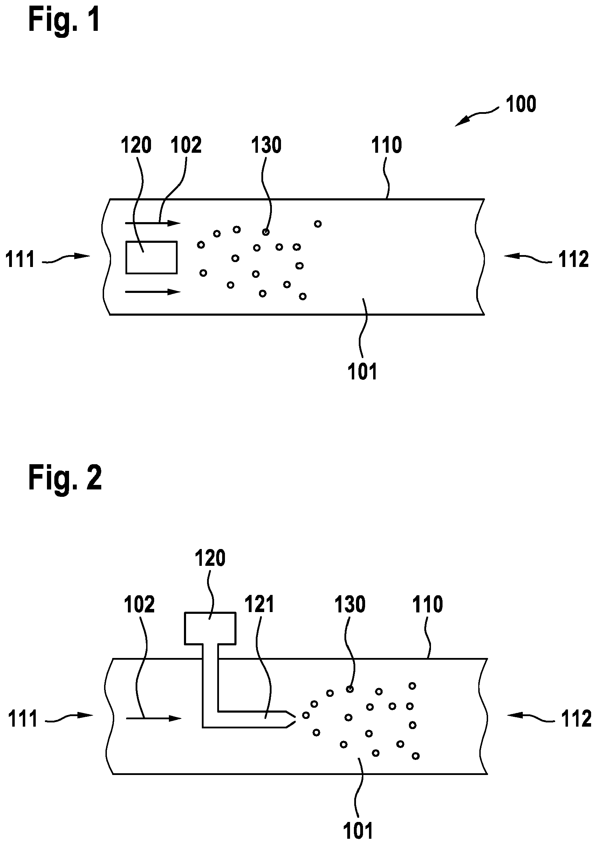

Fig. 1 zeigt einen Querschnitt eines ersten Ausführungsbeispiels einer Vorrichtung 100 zum Enthärten von Wasser 101. Die Vorrichtung 100 weist einen Behälter 110 mit einer Eingangsöffnung 111 und einer Ausgangsöffnung 112 sowie einen Generator 120 für Nanoblasen 130 auf. Der Generator 120 für Nanoblasen 130 ist eingerichtet, Gasblasen mit einem Durchmesser von bis zu zehn Mikrometern zu erzeugen. Die Nanoblasen 130 weisen also einen Durchmesser von zehn Mikrometern oder weniger auf. Das Wasser 101 kann mit einer Fließrichtung 102 von der Eingangsöffnung 111 zur Ausgangsöffnung 112 des Behälters 110 bewegt werden, beispielsweise integriert in eine Rohrleitung eines Hausanschlusses. Sind im Wasser 101 Ionen gelöst, können die Nanoblasen 130 als Kristallisationskeime dienen, die dazu führen, dass die im Wasser 101 gelösten Ionen an den Nanoblasen 130 kristallisieren und große Kristallstrukturen bilden, die im Gegensatz zu in Wasser 101 gelösten Ionen Rohrleitungen und Oberflächen wie beispielsweise Fliesen nicht zusetzen können. Dabei kann es vorgesehen sein, dass die Ionen Magnesium (II)- , Calcium (II)-, Hydrogencarbonat und/oder Carbonat-Ionen umfassen. Durch die Kristallisation an den Nanoblasen 130 kann dabei Calciumcarbonat, Calciumhydrogencarbonat, Magnesiumcarbonat, Magnesiumhydrogencarbonat oder ein Mischkristall bestehend aus Magnesium, Calcium, Carbonat und Hydrogencarbonat in beliebiger Zusammensetzung entstehen. Solche Kristalle können sich zwar auf Oberflächen anlagern, im Gegensatz zu einer wässrigen Lösung der genannten Ionen beim Abtrocknen entsteht jedoch keine feste Kalkschicht während des Auskristallisierens auf der Oberfläche bilden, da die Kristallstruktur schon vorher im Wasser 101 erzeugt wurde und die dabei entstehenden Kristalle von Oberflächen leicht wieder entfernt werden können.

Die Vorrichtung 100 der Fig. 1 ist dabei derart ausgestaltet, dass der Generator 120 für Nanoblasen 130 innerhalb eines Rohres angeordnet ist, wodurch sich die Vorrichtung 100 leicht in ein Rohrleitungssystem eines Hauses integrieren lässt.

Fig. 2 zeigt einen Querschnitt eines zweiten Ausführungsbeispiels einer Vorrichtung 100 zum Enthärten von Wasser 101, die analog zur Vorrichtung 100 der Fig. 1 aufgebaut ist, sofern im Folgenden keine Unterschiede beschrieben sind. Der Generator 120 ist außerhalb des Behälters 110 angeordnet, wobei eine Ausgangsdüse 121 des Generators 120 im Behälter 110 angeordnet ist und die Nanoblasen 130 mittels der Ausgangsdüse 121 erzeugt werden. Dadurch wird eine Vorrichtung 100 zum Enthärten von Wasser 101 ermöglicht, bei der der Generator 120 leichter zugänglich ist verglichen mit der Vorrichtung 100 der Fig. 1.

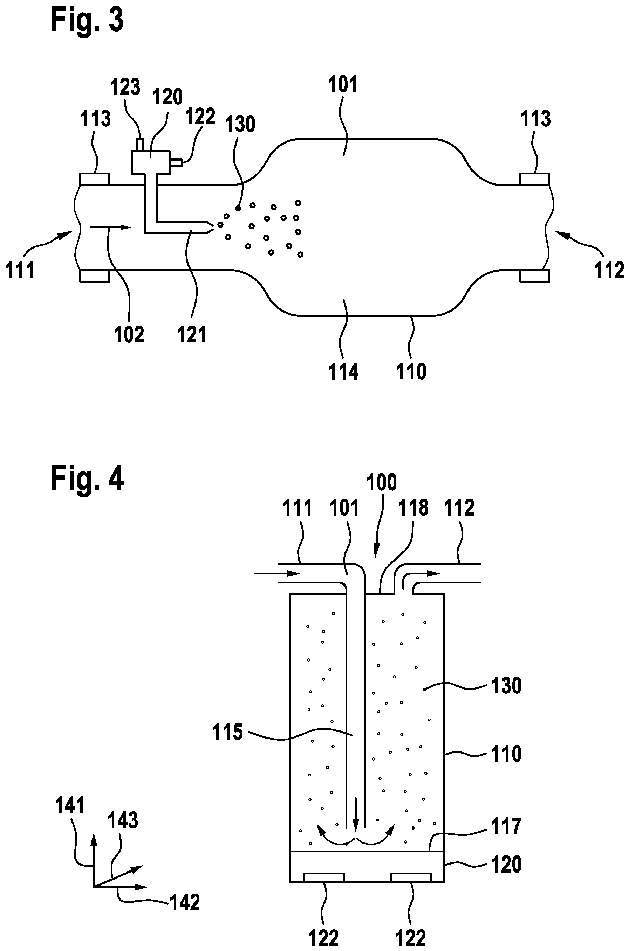

Fig. 3 zeigt einen Querschnitt eines dritten Ausführungsbeispiels einer Vorrichtung 100 zum Enthärten von Wasser 101, welches der Vorrichtung 100 der Fig. 2 entspricht, sofern im Folgenden keine Unterschiede beschrieben sind. Sowohl an der Eingangsöffnung 111 als auch an der Ausgangsöffnung 112 ist ein Rohranschluss 113 angebracht, mit dem die Vorrichtung 100 in ein bestehendes Rohrnetz integriert werden kann. In Fließrichtung 102 hinter der Ausgangsdüse 121, mittels welcher die Nanoblasen 130 erneut erzeugt werden, weist der Behälter 110 eine Verbreiterung 114 auf. Dies führt dazu, dass im Behälter 110 im Bereich der Verbreiterung 114 das Wasser 101 mit einer langsameren Fließgeschwindigkeit fließt und somit eine Wahrscheinlichkeit dafür, dass Ionen aus dem Wasser 101 an den Nanoblasen 130 kristallisieren, erhöht wird.

Alternativ zur Darstellung der Fig. 3 kann auch der Generator 120 der Fig. 1 als ein Ausführungsbeispiel der Vorrichtung 100 der Fig. 3 vorgesehen sein. Ebenso kann es vorgesehen sein, die Verbreiterung 114 im Ausführungsbeispiel der Fig. 1 zu verwenden.

Ebenfalls in Fig. 3 dargestellt ist eine Ansaugöffnung 122 für Luft, die dem Generator 120 zugeordnet ist. Der Generator 120 saugt also über die Ansaugöffnung 122 Luft an, wobei die Nanoblasen 130 Luftblasen sind. Ferner weist der Generator 120 einen Gasanschluss 123 auf, mittels welchem ein Gasbehälter, beispielsweise eine Gasflasche, an den Generator 120 angeschlossen werden kann. Die Nanoblasen 130 können dann auch aus einem über den Gasanschluss 123 bereitgestellten Gas bestehen. Es kann vorgesehen sein, nur die Ansaugöffnung 122 oder nur den Gasanschluss 123 am Generator 120 vorzusehen.

Fig. 4 zeigt einen Querschnitt eines vierten Ausführungsbeispiels einer Vorrichtung 100 zum Enthärten von Wasser 101. Im Gegensatz zu den in den Figuren 1 bis 3 gezeigten Ausführungsbeispielen ist die Vorrichtung 100 der Fig. 4 etwas anders aufgebaut. Der Behälter 110 ist im Ausführungsbeispiel der Vorrichtung 100 der Fig. 4 nicht zwischen der Eingangsöffnung 111 und der Ausgangsöffnung 112 angeordnet, sondern lediglich mit diesen verbunden. Der Behälter 110 weist in einer Raumrichtung 141 eine deutlich größere Ausdehnung auf als in einer zweiten Raumrichtung 142 und einer dritten Raumrichtung 143. Die erste, zweite und dritte Raumrichtung 141, 142, 143 können dabei als kartesisches Koordinatensystem aufgefasst werden, sodass die erste Raumrichtung 141 senkrecht auf der zweiten Raumrichtung 142 und der dritten Raumrichtung 143 steht. Die zweite Raumrichtung 142 steht senkrecht auf der dritten Raumrichtung 143. Die Vorrichtung 100 ist derart in ein Rohrsystem eingesetzt, dass die erste Raumrichtung 141 im Wesentlichen senkrecht zur Erdoberfläche ist. Die erste Raumrichtung 141 ist also parallel zu einer Gewichtskraft. Der Generator 120 ist an einem der Erdoberfläche zugewandten Ende 117 des Behälters 110 angeordnet. Die Eingangsöffnung 111 und die Ausgangsöffnung 112 sind an einem der Erdoberfläche abgewandten Ende 118 des Behälters 110 angeordnet. Die Eingangsöffnung 111 ist dabei mit einem Rohr 115 verbunden, welches bis in die Nähe des der Erdoberfläche zugewandten Endes 117 des Behälters 110 geführt ist. Wasser 101 tritt also über die Eingangsöffnung 111 und das Rohr 115 in den Behälter 110 in der Nähe des der Erdoberfläche zugewandten Endes 117 des Behälters 110 ein. Da in diesem Bereich auch der Generator 120 angeordnet ist, steigen die Nanoblasen 130 innerhalb des Behälters 110 von dem der Erdoberfläche zugewandten Ende 117 zu dem der Erdoberfläche abgewandten Ende 118 auf. Gleichzeitig fließt das Wasser 101 im Behälter 110 aufwärts, sodass in diesem Bereich die Nanoblasen 130 als Kristallisationskeime für im Wasser 101 befindliche Ionen dienen können. Der Generator 120 weist dabei analog zu Fig. 3 mehrere Ansaugöffnungen 122 auf. Alternativ oder zusätzlich kann auch, jedoch in Fig. 4 nicht gezeigt, ein Gasanschluss 123 analog zur Fig. 3 vorgesehen sein.

Alternativ zum in Fig. 4 gezeigten Ausführungsbeispiel kann es vorgesehen sein, den Generator 120 analog zur Fig. 2 im Bereich der Eingangsöffnung 111 anzuordnen, sodass die Nanoblasen 130 nicht an dem der Erdoberfläche zugewandten Ende 117 des Behälters 110 erzeugt werden, sondern direkt nach der Eingangsöffnung 111, und somit zunächst das Rohr 115 durchlaufen. Auch auf diese/vorgenannte Weise erzeugte Nanoblasen 130 steigen dann innerhalb des Behälters 110 auf und dienen als Kristallisationskeime für im Wasser 101 gelöste Ionen.

In einem weiteren alternativen Ausführungsbeispiel kann es vorgesehen sein, dass die Ausgangsöffnung 112 mit dem Rohr 115 verbunden ist und das Wasser 101 durch die Eingangsöffnung 111 an dem der Erdoberfläche abgewandten Ende 118 des Behälters 110 in den Behälter 110 eintritt. Dies kann sowohl bei dem Ausführungsbeispiel mit dem Generator 120 an dem der Erdoberfläche zugewandten Ende 117 des Behälters 110, welches in Fig. 4 gezeigt ist, als auch beim nicht gezeigten Ausführungsbeispiel mit dem Generator 120 im Bereich der Eingangsöffnung 111 realisiert sein.

Die in den Figuren 1 bis 4 gezeigten Ausführungsbeispiele der Vorrichtung 100 zum Enthärten von Wasser 101 können derart ausgestaltet sein, dass eine Lebensdauer der Nanoblasen 130 im Wasser 101 im Bereich einer Nanosekunde bis zehn Sekunden ist. Dies bedeutet, dass nach der Lebensdauer von einer Nanosekunde bis 10 Sekunden noch ein gewisser vorgegebener Anteil der Nanoblasen 130 im Wasser 101 vorhanden ist. Dabei können die Nanoblasen 130 auch einen Durchmesser deutlich kleiner als zehn Mikrometer aufweisen. Beispielsweise kann ein mittlerer Durchmesser der Nanoblasen 130 einen Mikrometer oder sogar nur einhundert Nanometer betragen. Je kleiner die Nanoblasen 130 sind, desto größer ist die Lebensdauer der Nanoblasen 130 im Wasser 101.

Der Generator 120 für Nanoblasen 130 kann dabei wie in den Druckschriften US 2016/0339399 A1, US 2016/0319209 A1 und/oder US 2016/0236158 A1 aufgebaut sein. Bezüglich des Erzeugens von Nanoblasen 130 werden die genannten Druckschriften explizit durch Rückbezug in die vorliegende Patentanmeldung aufgenommen.

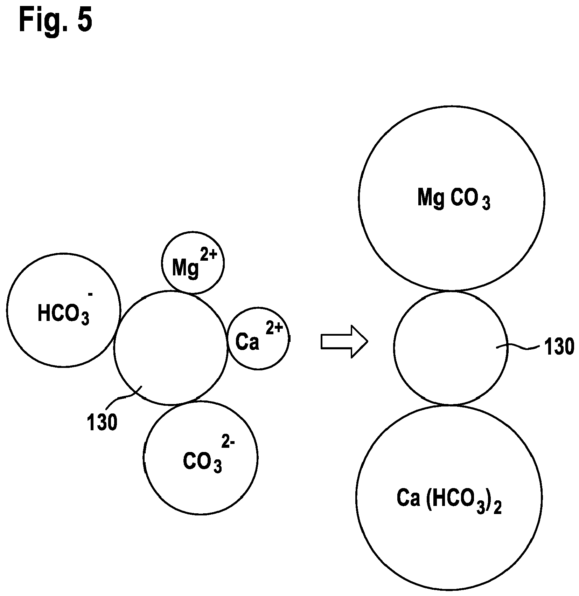

Fig. 5 zeigt eine Nanoblase 130, an die ein Magnesium (II)-, ein Calcium (II)-, ein Carbonat- und ein Hydrogencarbonation angelagert sind. Ferner können weitere der genannten Ionen an der Nanoblase 130 angelagert sein. Es kann vorgesehen sein, dass sich die an der Nanoblase 130 angelagerten Ionen zu Magnesiumcarbonat oder Calciumhydrogencarbonat oder Calciumcarbonat oder Magnesiumhydrogencarbonat oder einer Mischung aus den genannten Ionen verbinden. Exemplarisch ist in Fig. 5 die Bildung eines Magnesiumcarbonat-Kristalls und eines Calciumhydrogencarbonat-Kristalls dargestellt.

Durch die Nanoblasen 130, die als Kristallisationskeime wirken, werden Kristallstrukturen erzeugt, die so groß sind, dass sie sich bei einer Anlagerung an eine Oberfläche leicht von dieser lösen lassen. Wären keine Nanoblasen 130 vorhanden, würden die Ionen weiterhin im Wasser 101 gelöst sein und wenn das Wasser auf einer Oberfläche verdunstet, dort stark haftende Ablagerungen bilden. Durch die Nanoblasen 130 wird also eine deutliche Verbesserung erreicht bezüglich der Reinigung von Oberflächen, beispielsweise Duschwänden und -türen im Haushalt.

In einem Verfahren zum Enthärten von Wasser 101 werden mittels des Generators 120 Nanoblasen 130 mit einem Durchmesser von bis zu zehn Mikrometern in Wasser 101, insbesondere innerhalb des Behälters 110 der Vorrichtung 100 zum Enthärten von Wasser 101 erzeugt. Dabei kann es vorgesehen sein, dass die Nanoblasen 130 als Kristallisationskeime zur Bildung von Kristallstrukturen der im Wasser 101 gelösten Ionen dienen.

Obwohl die Erfindung im Detail durch die bevorzugten Ausführungsbeispiele beschrieben wurde, ist die Erfindung nicht auf die offenbarten Beispiele eingeschränkt und andere Variationen hieraus können vom Fachmann abgeleitet werden, ohne den Schutzumfang der Erfindung zu verlassen.

## Patentansprüche

1. Vorrichtung (100) zum Enthärten von Wasser (101), aufweisend einen Behälter (110) mit einer Eingangsöffnung (111) und einer Ausgangsöffnung (112) und einem Generator (120) für Nanoblasen (130), wobei der Generator (120) für Nanoblasen (130) eingerichtet ist, Gasblasen mit einem Durchmesser von bis zu zehn Mikrometern zu erzeugen.

2. Vorrichtung (100) nach Anspruch 1, wobei die Gasblasen für im Wasser (101) gelöste Ionen als Kristallisationskeime zur Bildung von Kristallstrukturen dienen.

3. Vorrichtung (100) nach Anspruch 2, wobei die Ionen Magnesium (II)-, Calcium (II)-, Hydrogencarbonat und/oder Carbonat-Ionen umfassen.

4. Vorrichtung (100) nach einem der Ansprüche 1 bis 3, wobei die Eingangsöffnung (111) und/oder die Ausgangsöffnung (112) einen Rohranschluss (113) aufweisen.

5. Vorrichtung (100) nach einem der Ansprüche 1 bis 4, wobei der Generator (120) eine Ausgangsdüse (121) aufweist, wobei die Ausgangsdüse (121) im Behälter (110) angeordnet ist.

6. Vorrichtung (100) nach einem der Anspruche 1 bis 5, wobei der Generator (120) eine Ansaugöffnung (122) für Luft aufweist und wobei die Gasblasen Luftblasen sind.

7. Vorrichtung (100) nach einem der Ansprüche 1 bis 6, wobei der Behälter (110) in einer ersten Raumrichtung (141) eine deutlich größere Ausdehnung aufweist als in einer zweiten Raumrichtung (142) und einer dritten Raumrichtung (143), wobei vorgesehen ist, den Behälter (110) derart zu verwenden, dass im Betrieb die erste Raumrichtung (141) im Wesentlichen senkrecht zur Erdoberfläche ist und die Gasblasen an dem der Erdoberfläche zugewandten Ende (117) des Behälters (110) erzeugt werden können.

8. Vorrichtung (100) nach Anspruch 7, wobei die Eingangsöffnung (111) und die Ausgangsöffnung (112) an dem der Erdoberfläche abgewandten Ende (118) des Behälters (110) angeordnet sind und ein Rohr (115) innerhalb des Behälters (110) von der Eingangsöffnung (111) bis in die Nähe des der Erdoberfläche zugewandten Endes (117) des Behälters (110) geführt ist.

9. Verfahren zum Enthärten von Wasser (101), bei dem mittels eines Generators (120) Nanoblasen (130) mit einem Durchmesser von bis zu zehn Mikrometern im Wasser (101) erzeugt werden.

10. Verfahren nach Anspruch 9, wobei die Nanoblasen (130) als Kristallisationskeime zur Bildung von Kristallstrukturen für im Wasser (101) gelöste Ionen dienen.

## Geänderte Patentansprüche

### Geänderte Patentansprüche gemäss Regel 137(2) EPÜ.

1. Vorrichtung (100) zum Enthärten von Wasser (101), aufweisend einen Behälter (110) mit einer Eingangsöffnung (111) und einer Ausgangsöffnung (112) und einem Generator (120) für Nanoblasen (130), wobei der Generator (120) für Nanoblasen (130) eingerichtet ist, Gasblasen mit einem Durchmesser von bis zu zehn Mikrometern zu erzeugen, wobei der Behälter (110) in einer ersten Raumrichtung (141) eine deutlich größere Ausdehnung aufweist als in einer zweiten Raumrichtung (142) und einer dritten Raumrichtung (143), wobei vorgesehen ist, den Behälter (110) derart zu verwenden, dass im Betrieb die erste Raumrichtung (141) im Wesentlichen senkrecht zur Erdoberfläche ist und die Gasblasen an dem der Erdoberfläche zugewandten Ende (117) des Behälters (110) erzeugt werden können, wobei die Eingangsöffnung (111) und die Ausgangsöffnung (112) an dem der Erdoberfläche abgewandten Ende (118) des Behälters (110) angeordnet sind und ein Rohr (115) innerhalb des Behälters (110) von der Eingangsöffnung (111) bis in die Nähe des der Erdoberfläche zugewandten Endes (117) des Behälters (110) geführt ist.

2. Vorrichtung (100) nach Anspruch 1, wobei die Gasblasen für im Wasser (101) gelöste Ionen als Kristallisationskeime zur Bildung von Kristallstrukturen dienen.

3. Vorrichtung (100) nach Anspruch 2, wobei die Ionen Magnesium (II)-, Calcium (II)-, Hydrogencarbonat und/oder Carbonat-Ionen umfassen.

4. Vorrichtung (100) nach einem der Ansprüche 1 bis 3, wobei die Eingangsöffnung (111) und/oder die Ausgangsöffnung (112) einen Rohranschluss (113) aufweisen.

5. Vorrichtung (100) nach einem der Ansprüche 1 bis 4, wobei der Generator (120) eine Ausgangsdüse (121) aufweist, wobei die Ausgangsdüse (121) im Behälter (110) angeordnet ist.

6. Vorrichtung (100) nach einem der Anspruche 1 bis 5, wobei der Generator (120) eine Ansaugöffnung (122) für Luft aufweist und wobei die Gasblasen Luftblasen sind.

7. Verfahren zum Enthärten von Wasser (101), bei dem mittels eines Generators (120) Nanoblasen (130) mit einem Durchmesser von bis zu zehn Mikrometern im Wasser (101) in einem Behälter (110) erzeugt werden, wobei der Behälter (110) in einer ersten Raumrichtung (141) eine deutlich größere Ausdehnung aufweist als in einer zweiten Raumrichtung (142) und einer dritten Raumrichtung (143), wobei der Behälter (110) derart verwendet wird, dass im Betrieb die erste Raumrichtung (141) im Wesentlichen senkrecht zur Erdoberfläche ist und die Gasblasen an dem der Erdoberfläche zugewandten Ende (117) des Behälters (110) erzeugt werden, wobei die Eingangsöffnung (111) und die Ausgangsöffnung (112) an dem der Erdoberfläche abgewandten Ende (118) des Behälters (110) angeordnet sind und ein Rohr (115) innerhalb des Behälters (110) von der Eingangsöffnung (111) bis in die Nähe des der Erdoberfläche zugewandten Endes (117) des Behälters (110) geführt ist.

8. Verfahren nach Anspruch 7, wobei die Nanoblasen (130) als Kristallisationskeime zur Bildung von Kristallstrukturen für im Wasser (101) gelöste Ionen dienen.
